# EUROPÄISCHE PATENTSCHRIFT

(11) **EP 1 810 389 B1**
(45) Veröffentlichungstag und Bekanntmachung des Hinweises auf die Patenterteilung: **29.12.2010**
(21) Anmeldenummer: 06793972.8
(22) Anmeldetag: 05.10.2006
(51) Int. Cl.: H02K 5/20

(54) **ELEKTROMOTOR**
ELECTRIC MOTOR
MOTEUR ELECTRIQUE

(30) Priorität: 02.11.2005 DE 10552364
(43) Veröffentlichungstag der Anmeldung: 25.07.2007
(73) Patentinhaber: Continental Automotive GmbH, 30165 Hannover (DE)
(72) Erfinder: NOLL, Michael, 61462 Königstein (DE)
(86) Internationale Anmeldenummer: PCT/EP2006/067084
(87) Internationale Veröffentlichungsnummer: WO 2007/051681

(56) Entgegenhaltungen:
- FR-A1- 2 817 406
- JP-A- 3 150 048
- JP-A- 63 110 932
- US-A- 3 184 624
- US-A- 4 627 793
- US-A1- 2002 047 377

## Beschreibung

Die Erfindung bezieht sich auf einen Elektromotor sowie auf eine Verwendung des Elektromotors.

Elektromotoren sind bekannt. In der DE 102 26 976 A1 wird ein Elektromotor mit einem mehrpoligen Rotor und einem mehrpoligen Stator beschrieben. Der Elektromotor ist von Statorwicklungen umgebenen, radial zum Rotor weisenden Statorpolen versehen. Zwischen dem Stator und Rotor ist eine sich mindestens über die Länge des Rotors erstreckende, starre Isolierhülse angeordnet, die radial zum Rotor angeordnete Vorsprünge aufweist, wobei jeweils ein Vorsprung zwischen zwei benachbart angeordneten Statorpolen angeordnet ist. Bei dem Einsatz von Elektromotoren unterschiedlicher Bauart ist es in der Regel nachteilig, dass im Betrieb eine Motorwärme entsteht, die entsprechend abzuführen ist. In der Regel geschieht dies über die Umgebungsluft, wobei jedoch in vielen Fällen nicht verhindert werden kann, dass es zu nachteiligen Wärmestaus kommt.

Ein Elektromotor gemäß dem Präambel des Anspruchs 1 ist aus JP63 110 932 bekannt.

Der Erfindung liegt daher die Aufgabe zugrunde, einen Der Erfindung liegt daher die Aufgabe zugrunde, einen Elektromotor zu schaffen, mit welchem es möglich ist, die anfallende Motorwärme relativ schnell aus dem Bereich des Motors abzuführen. Der Erfindung liegt ferner die Aufgabe zugrunde, eine spezielle Verwendung des Elektromotors zu schaffen.

Die der Erfindung zugrunde liegende Aufgabe wird durch einen Elektromotor mit einem Rotor, mindestens zwei Magnetsegmenten, einem Rückschlussring und einem Gehäuse aus Aluminium gelöst, bei dem das Gehäuse an seiner Außenseite parallel zur Längsachse des Elektromotors mindestens einen spiralförmig verlaufenden Vorsprung aufweist, und bei dem um das Gehäuse ein becherförmiger Außendeckel angeordnet ist, an dessen Innenseite der mindestens eine spiralförmig verlaufende Vorsprung anliegt, wobei der becherförmige Außendeckel ein Kühlmitteleintritt und ein Kühlmittelaustritt aufweist. Es können zwei, vier oder sechs, gegebenenfalls paarweise auch mehr Magnetsegmente eingesetzt werden. Der mindestens eine spiralförmig verlaufende Vorsprung kann im Querschnitt verschiedenartig ausgebildet sein. Es ist zu gewährleisten, dass dieser an der Innenseite des becherförmigen Außendeckels anliegt, wobei eine Dichtwirkung zu erreichen ist. Der becherförmige Außendeckel weist einen Kühlmitteleintritt und einen Kühlmittelaustritt auf, wobei als Kühlmittel beispielsweise wässrige Lösungen eingesetzt werden können. Durch die Anordnung des mindestens einen spiralförmig verlaufenden Vorsprungs bildet sich zwischen dem Gehäuse aus Aluminium und dem becherförmigen Außendeckel im Bereich des spiralförmig verlaufenden Vorsprungs ein Strömungsraum für das Kühlmittel aus, wobei sichergestellt ist, dass das Gehäuse aus Aluminium nahezu gleichmäßig von Kühlmittel über nahezu die gesamte Länge des Elektromotors umspült wird.

Es hat sich in überraschender Weise gezeigt, dass sich die Motorwärme relativ schnell aus dem Bereich des Elektromotors abführen lässt, wenn das Gehäuse aus Aluminium derart mit Kühlmittel umspült wird. Die nachteiligen Wärmestaus infolge der nur langsamen Wärmeabfuhr an die Umgebungsluft werden dabei vollständig vermieden.

Eine bevorzugte Ausgestaltung der Erfindung besteht darin, dass das Verhältnis des mittleren Abstands b zwischen zwei im Längsschnitt benachbart angeordneten Teilen des Vorsprungs zum mittleren Bereich B des Vorsprungs im Bereich von 2,8 bis 3 liegt. Ist der Vorsprung im Querschnitt beispielsweise rechteckig ausgebildet, entspricht der mittlere Abstand b genau dem Abstand zwischen zwei im Längsschnitt benachbart angeordneten Teilen des Vorsprungs. Die mittlere Breite B des Vorsprungs entspricht dann genau der Breite des Vorsprungs. Sollte der Vorsprung im Querschnitt beispielsweise trapezförmig ausgebildet sein, so wäre unter der mittleren Breite B des Vorsprungs die mittlere Breite im Trapez im Längsschnitt zu verstehen. Der mittlere Abstand b wäre dann der Abstand zwischen zwei im Längsschnitt benachbart angeordneten Teilen des Vorsprunges in der Höhe der mittleren Breite B. Wird das Verhältnis im Bereich von 2,8 bis 3 eingestellt, so werden die Strömungsverhältnisse im gebildeten Strömungsbereich optimiert, da so ein besonders großer Strömungsquerschnitt für das Kühlmittel erzielt wird.

Gemäß einer weiteren bevorzugten Ausgestaltung der Erfindung ist der Vorsprung beidseitig abgeschrägt ausgebildet, wobei der Neigungswinkel α im Bereich von 100° bis 120° liegt. Diese konstruktive Ausgestaltung des Vorsprungs gewährleistet einen Einsatz für vielerlei Einsatzzwecke und vereinfacht die Fertigung des Elektromotors, so dass eine Serienfertigung auf relativ einfache Weise realisiert werden kann.

Nach einer weiteren bevorzugten Ausgestaltung der Erfindung ist vorgesehen, dass ein einziger spiralförmig verlaufender Vorsprung angeordnet ist, der sich vom Kühlmitteleintritt zum Kühlmittelaustritt erstreckt. Dabei ist vorteilhaft, dass das Gehäuse aus Aluminium mithilfe eines einfachen Gießverfahrens serienmäßig gefertigt werden kann und gleichzeitig eine gleichmäßige Wärmeabfuhr über die Längsseite des Elektromotors sichergestellt wird.

Gegenstand der Erfindung ist schließlich die Verwendung des Elektromotors zur Betätigung von Nockenwellen in Kraftfahrzeugen. Gerade bei Elektromotoren, die Nockenwellen in Kraftfahrzeugen antreiben, ist die bisherige Abfuhr der Motorwärme problematisch. Dieses Problem lässt sich besonders vorteilhaft durch die Ausbildung des Strömungsraums lösen, wobei als Kühlmittel in besonders vorteilhafter Weise Wasser aus dem Kühlkreislauf des Kraftfahrzeugs entnommen werden kann.

Die Erfindung wird nachfolgend anhand der Zeichnung (Fig. 1 bis Fig. 3) näher und beispielhaft erläutert.
Fig. 1 zeigt den Elektromotor ohne Kommutator im Längsschnitt.
Fig. 2 zeigt das Detail A gemäß Fig. 1 in vergrößerter Darstellung.
Fig. 3 zeigt die Außenseite des Gehäuses aus Aluminium in der Seitenansicht.

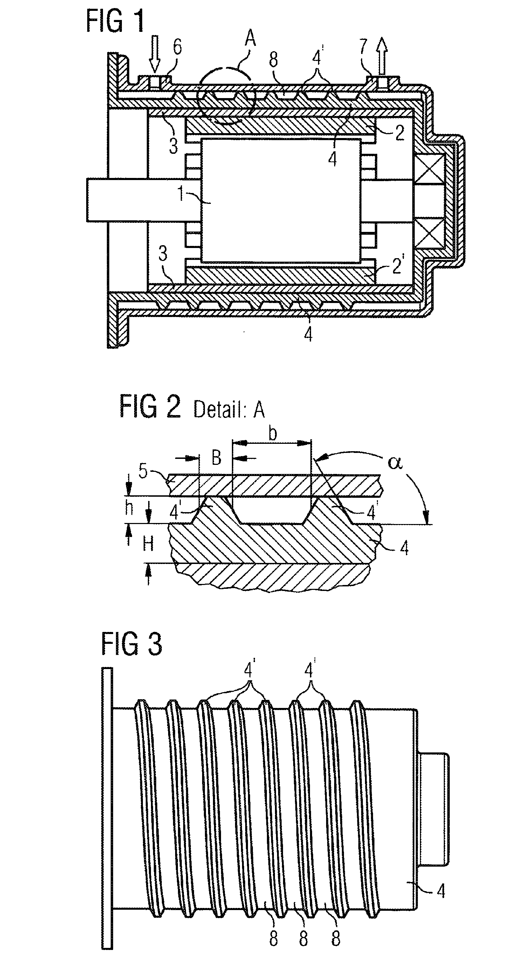

In Fig. 1 ist der Elektromotor ohne Kommutator im Längsschnitt dargestellt, der einen Rotor 1, zwei Magnetsegmente 2, 2', einen Rückschlussring 3 und ein Gehäuse 4 aus Aluminium besitzt. Das Gehäuse 4 weist an seiner Außenseite parallel zur Längsachse des Elektromotors einen spiralförmig verlaufenden Vorsprung 4' auf. Um das Gehäuse 4 ist ein becherförmiger Außendeckel 5 angeordnet, an dessen Innenseite der spiralförmig verlaufende Vorsprung 4' anliegt, wobei der becherförmige Außendeckel 5 ein Kühlmitteleintritt 6 und ein Kühlmittelaustritt 7 aufweist, durch die das Kühlmittel in Pfeilrichtung strömt. Auf diese Weise wird das Kühlmittel vom Kühlmitteleintritt 6 über nahezu der gesamten Länge des Elektromotors zum Kühlmittelaustritt 7 transportiert, wobei das Gehäuse 4 aus Aluminium gleichmäßig umströmt wird, was zu einer schnellen Abfuhr der Motorwärme führt. Um vom Kühlmitteleintritt 6 zum Kühlmittelaustritt 7 zu gelangen, durchströmt das Kühlmittel somit den Strömungsraum 8. Das Gehäuse 4 aus Aluminium wird in der Regel durch ein Gießverfahren hergestellt. Gemäß Fig. 1 ist somit ein einziger spiralförmig verlaufender Vorsprung 4' angeordnet, der sich vom Kühlmitteleintritt 6 zum Kühlmittelaustritt 7 erstreckt.

In Fig. 2 ist das Detail A gemäß Fig. 1 vergrößert dargestellt. Das Verhältnis des mittleren Abstandes b zwischen zwei im Längsschnitt benachbart angeordneten Teilen des Vorsprungs 4' zum mittleren Bereich B des Vorsprungs 4' liegt im Bereich von 2,8 bis 3. Das Verhältnis der mittleren Breite B zur zweiten Höhe H liegt bevorzugt im Bereich von 0,5 zu 0,8, was dann zu einer sehr guten Ableitung der Motorwärme führt. Im dargestellten Fall ist der spiralförmig verlaufende Vorsprung 4' im Querschnitt somit trapezförmig ausgebildet. Das Verhältnis der ersten Höhe h zur zweiten Höhe H, die der eigentlichen Wanddicke des Gehäuses 4 entspricht, liegt in der Regel zwischen 1 bis 1,2. Dadurch wird eine große Oberfläche des Gehäuses gewährleistet, was den Wärmeübergang vom Gehäuse ins Kühlmedium beschleunigt. Der Vorsprung 4' ist beidseitig abgeschrägt ausgebildet, wobei der Neigungswinkel α im Bereich von 100° bis 120° liegt.

In Fig. 3 ist das Gehäuse 4 aus Aluminium in der Seitenansicht dargestellt. Das Gehäuse 4 aus Aluminium weist an seiner Außenseite parallel zur Längsachse des Elektromotors einen spiralförmig verlaufenden Vorsprung 4' auf, durch den der Strömungsraum 8 für das Kühlmittel gebildet wird. Sollte der Elektromotor zur Betätigung von Nockenwellen in Kraftfahrzeugen eingesetzt werden, so eignet sich als Kühlmittel in besonders vorteilhafter Weise Kühlwasser aus dem Kühlkreislauf des Kraftfahrzeugs.

## Patentansprüche

1. Elektromotor mit einem Rotor (1), mindestens zwei Magnetsegmenten (2, 2'), einem Rückschlussring (3) und einem Gehäuse (4) **dadurch gekennzeichnet, dass** das Gehäuse aus Aluminium ist, wobei das Gehäuse (4) an seiner Außenseite parallel zur Längsachse des Elektromotors mindestens einen spiralförmig verlaufenden Vorsprung (4') aufweist, wobei um das Gehäuse (4) ein becherförmiger Außendeckel (5) angeordnet ist, an dessen Innenseite der mindestens eine spiralförmig verlaufende Vorsprung (4') anliegt, wobei der becherförmige Außendeckel (5) einen Kühlmitteileintritt (6) und einen Kühlmiteilaustritt (7) aufweist.

2. Elektromotor nach Anspruch 1, bei dem das Verhältnis des mittleren Abstands b zwischen zwei im Längsschnitt benachbart angeordneten Teilen des Vorsprungs (4') zum mittleren Bereich B des Vorsprungs (4') im Bereich von 2,8 bis 3 liegt.

3. Elektromotor nach Anspruch 1 oder Anspruch 2, bei dem der Vorsprung (4') beidseitig abgeschrägt ausgebildet ist, wobei der Neigungswinkel α im Bereich von 100° bis 120° liegt.

4. Elektromotor nach einem der Ansprüche 1 bis 3, bei dem ein einziger spiralförmig verlaufender Vorsprung (4') angeordnet ist, der sich vom Kühlmitteleintritt (6) zum Kühlmittelaustritt (7) erstreckt.

5. Verwendung des Elektromotors nach einem der Ansprüche 1 bis 4 zur Betätigung von Nockenwellen in Kraftfahrzeugen.

## Claims

1. Electric motor having a rotor (1), at least two magnet segments (2, 2'), a magnetic return path ring (3) and a housing (4), **characterized in that** the housing is made from aluminium, the housing (4) having at least one helical projection (4') on its outer side parallel to the longitudinal axis of the electric motor, a cup-shaped outer cover (5) being arranged around the housing (4), the at least one helical projection (4') bearing against the inner side of said outer cover, wherein the cup-shaped outer cover (5) has a coolant inlet (6) and a coolant outlet (7).

2. Electric motor according to Claim 1, in which the ratio of the average distance b between two adjacent parts of the projection (4') arranged in the longitudinal section to the average area B of the projection (4') lies in the range from 2.8 to 3.

3. Electric motor according to Claim 1 or Claim 2, in which the projection (4') is chamfered on both sides, the slope angle α being in the range from 100° to 120°.

4. Electric motor according to one of Claims 1 to 3, in which a single helical projection (4') is arranged, which extends from the coolant inlet (6) to the coolant outlet (7).

5. Use of the electric motor according to one of Claims 1 to 4 for actuating camshafts in motor vehicles.

## Revendications

1. Moteur électrique comportant un rotor (1), au moins deux segments aimantés (2, 2'), une bague de reflux magnétique (3) et un boîtier (4), **caractérisé par le fait que** le boîtier est en aluminium, le boîtier (4) ayant, sur sa face extérieure, parallèlement à l'axe longitudinal du moteur électrique, au moins une nervure (4') en forme de spirale, un couvercle extérieur (5) en forme de pot étant disposé autour du boîtier (4) et la au moins une nervure (4') à forme de spirale s'appliquant sur la face intérieure du couvercle extérieur (5), ledit couvercle extérieur (5) en forme de pot comportant une entrée (6) et une sortie (7) pour un fluide refroidissant.

2. Moteur électrique selon la revendication 1, dans lequel le rapport de la distance moyenne b entre deux spires de la nervure (4') voisines en coupe longitudinale et la largeur moyenne B de la nervure (4') se trouve dans une plage de 2,8 à 3.

3. Moteur électrique selon la revendication 1 ou la revendication 2, dans lequel la nervure (4') est biseautée sur les deux côtés, l'angle de biseautage α se situant dans une plage de 100° à 120°.

4. Moteur électrique selon l'une des revendications 1 à 3, dans lequel se trouve une seule nervure (4') en forme de spirale qui s'étend de l'entrée (6) de fluide refroidissant jusqu'à la sortie (7) de fluide refroidissant.

5. Utilisation du moteur électrique selon l'une des revendications 1 à 4 pour commander des arbres à cames dans les véhicules automobiles.
